Europäisches Patentamt

European Patent Office

Office européen des brevets

(11) Veröffentlichungsnummer: **0 368 001**

**A2**

(12) **EUROPÄISCHE PATENTANMELDUNG**

(21) Anmeldenummer: **89118758.5**

(22) Anmeldetag: **10.10.89**

(51) Int. Cl.⁵: **G01M 11/02**

(30) Priorität: **05.11.88 DE 3837591**

(43) Veröffentlichungstag der Anmeldung:
**16.05.90 Patentblatt 90/20**

(84) Benannte Vertragsstaaten:
**AT CH FR GB LI**

(71) Anmelder: **ANT Nachrichtentechnik GmbH**
**Gerberstrasse 33**
**D-7150 Backnang(DE)**

(72) Erfinder: **Warm, Wolfgang, Dipl.-Ing.**
**Hauptstrasse 7**
**D-7159 Auenwald(DE)**

(54) **Verfahren zum Ermitteln der Übertragungseigenschaften eines Lichtwellenleiters.**

(57) Bisher waren zur Druchführung eines solchen Verfahrens recht aufwendige Mittel (z.B. Sambling-Oszilloskope) erforderlich. Das neue Verfahren soll mit geringem Aufwand zuverlässige Informationen über die Ubertragungseigenschaften eines Lichtwellenleiters bringen. Es besteht darin, daß in einem Empfänger die über den Lichtwellenleiter (LWL) übertragenen Impulse kontinuierlich mit einem Referenzimpuls, der zumindest annähernd die Form der zu erwartenden übertragenen Impulse besitzt, verglichen werden und daß ein solcher in das Referenzimpuls-Fenster fallender Ausschnitt der empfangenen Impulsfolge, welcher ein oberhalb einer vorgegebenen Schwelle liegendes Maß an Übereinstimmung mit dem Referenzimpuls aufweist, ausgeblendet wird für die Ermittlung der Impulsveränderungen.

Mit diesem Verfahren können z.B. die Dispersion, Dämpfung und Ubertragungsbandbreite eines Lichtwellenleiters ermittelt werden.

Fig. 1

EP 0 368 001 A2

## Verfahren zum Ermitteln der Übertragungseigenschaften eines Lichtwellenleiters

Die vorliegende Erfindung betrifft ein Verfahren zum Ermitteln der Übertragungseigenschaften eines Lichtwellenleiters, wobei in den Lichtwellenleiter eine Lichtimpulsfolge eingespeist wird, dann die über den Lichtwellenleiter übertragene Lichtimpulsfolge in einem Empfänger in eine proportionale elektrische Impulsfolge umgewandelt wird, daraus einzelne Impulse detektiert werden und anschließend die von den Übertragungseigenschaften des Lichtwellenleiters abhängigen Veränderungen der detektierten Impulse gegenüber den Impulsen vor der Übertragung ermitteln werden.

Die hier in Rede stehenden Veränderungen, welche optische Signale bei der Übertragung über einen Lichtwellenleiter erfahren, sind Dämpfung und Dispersion. Die Dämpfung äußert sich darin, daß die Signalleistung bei der Übertragung über einen Lichtwellenleiter vermindert wird. Ein über einen Lichtwellenleiter übertragener Lichtimpuls erleidet neben der Dämpfung auch eine Dispersion, d.h. es kommt zu einer Impulsverbreiterung. Die Ursache für die Dispersion sind Laufzeitunterschiede in der Lichtausbreitung im Lichtwellenleiter. Der Übertragungsbandbreite eines Lichtwellenleiters werden eben durch die Dispersion Grenzen gesetzt. Von der Dispersion, der Impulsverbreiterung, hängt es nämlich ab, mit welcher Folgefrequenz Lichtimpulse über einen Lichtwellenleiter übertragen werden können, ohne daß es zu einer so starken zeitlichen Überlappung kommt, die eine Detektion der einzelnen Impulse nicht mehr zuläßt.

Das einleitend erwähnte Verfahren zum Ermitteln der Übertragungseigenschaften, wie Dispersion und Dämpfung, ist z.B. aus der DE 37 08 152 A1 oder der NTZ, Bd. 36 (1983) Heft 7, S. 442-445 bekannt. Den beiden Veröffentlichungen ist zu entnehmen, daß zur Bestimmung der Dispersion und Dämpfung ein Oszilloskop eingesetzt wird. Um eine jitterfreie Darstellung der übertragenen Impulse auf dem Oszillographenschirm zu ermöglichen, wird ein Triggersignal benötigt, welches synchron mit der sendeseitig in den Lichtwellenleiter eingespeisten Impulsfolge ist. Bei dem Verfahren der DE 27 08 152 A1 wird zu diesem Zweck zusammen mit der Impulsfolge extra ein synchrones Triggersignal übertragen.

Der Erfindung liegt nun die Aufgabe zugrunde, ein Verfahren der·eingangs genannten Art anzugeben, das mit möglichst geringem Aufwand eine zuverlässige Ermittlung der Übertragungseigenschaften eines Lichtwellenleiters ermöglicht.

Die Aufgabe wird erfindungsgemäß durch die Merkmale des Anspruches 1 gelöst. Zweckmäßige Ausführungen der Erfindung gehen aus den Unteransprüchen hervor.

Die Erfindung kommt im Gegensatz zum Stand der Technik ohne ein aufwendiges Oszilloskop aus. Sie beruht im wesentlichen auf einem Korrelationsverfahren, das mit sehr einfachen Schaltungsmitteln durchführbar ist.

Anhand eines in der Zeichnung dargestellten Ausführungsbeispiels wird nachfolgend die Erfindung näher erläutert.

Figur 1 zeigt ein Prinzipschaltbild einer Anordnung, die nach dem Verfahren der Erfindung die Übertragungseigenschaften eines Lichtwellenleiters ermittelt, und

Figur 2 zeigt einige zugehörige Impulsdiagramme.

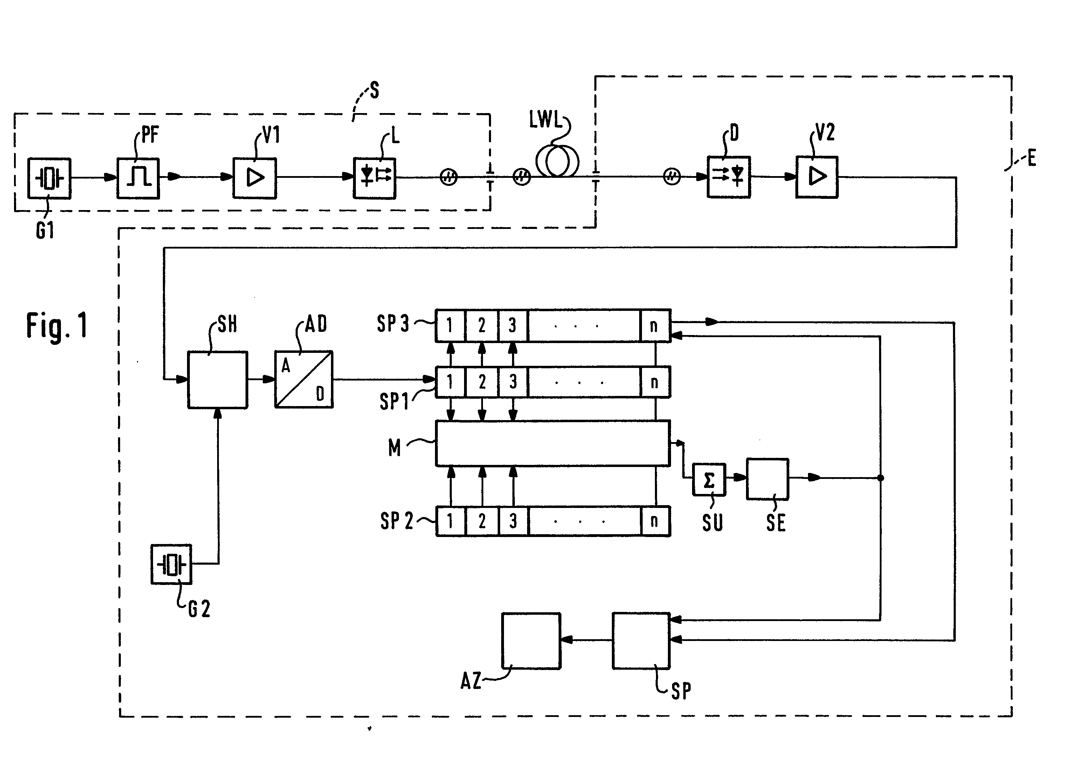

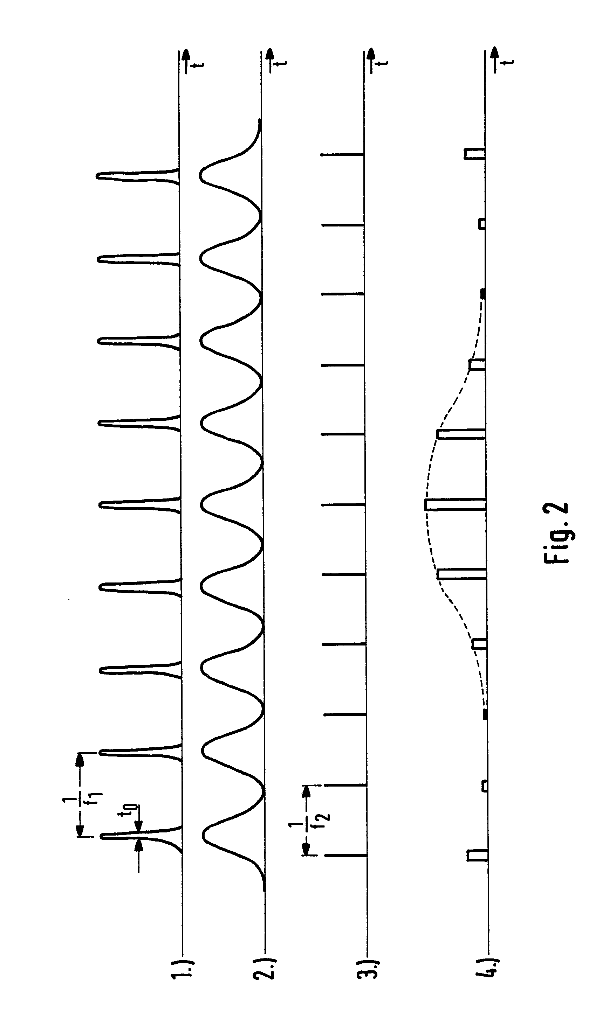

Wie der Figur 1 zu entnehmen ist, wird in einem Sender S von einem Taktgenerator G1 ein Taktsignal der Frequenz $f_1$ generiert, aus dem in einer Pulsformerstufe PF eine Impulsfolge gebildet wird. In einer anschließenden Verstärkerstufe V1 wird daraus eine zur Ansteuerung eines Lasers L geeignete Stromimpulsfolge erzeugt, so daß der Laser eine Lichtimpulsfolge mit der Impulsfolgefrequenz $f_1$ abgibt. Die einzelnen Impulse dieser Lichtimpulsfolge haben zweckmäßigerweise eine sehr schmale Halbwertbreite $t_0$ von z.B. 100ps. An den Ausgang des Sender S ist ein Lichtwellenleiter LWL angekoppelt, dessen Übertragungseigenschaften ermittelt werden sollen. Dabei wird die vom Laser L abgegebene Lichtimpulsfolge mit der Impulsfolgefrequenz $f_1$ [s. Zeile 1) in Figur 2] in den Lichtwellenleiter LWL eingespeist. Mit seinem dem Sender S gegenüberliegenden Ende ist der Lichtwellenleiter LWL an einen Empfänger E angekoppelt. Darin wird die über den Lichtwellenleiter LWL übertragene Lichtimpulsfolge von einer Fotodiode D in eine proportionale elektrische Impulsfolge umgewandelt. Nach geeigneter Verstärkung V2 wird diese Impulsfolge [s. Zeile 2) in Figur 2] einer Sample and Hold-Schaltung SH zugeführt. Ein Vergleich der in der Zeile 1) der Figur 2 dargestellten Impulsfolge vor Einspeisung in den Lichtwellenleiter mit der in der Zeile 2) dargestellten Impulsfolge nach der Übertragung über den Lichtwellenleiter LWL verdeutlicht die Dispersion.

Die Sample and Hold-Schaltung SH wird mit einem von einem Generator G2 erzeugten Taktsignal der Frequenz $f_2$ [s. Zeile 3) in Figur 2] angesteuert. Dieses Taktsignal ist weder synchron zu der empfangenen Impulsfolge [Zeile 2)] noch hat es die gleiche Frequenz (d.h. $f_2 \neq f_1$). Bei dem in Figur 2 dargestellten Beispiel ist die Frequenz $f_2$, mit der die empfangene Impulsfolge [zeile 2)] der Impulsfolgefrequenz $f_1$ abgetastet wird, so gewählt, daß $f_2 < f_1$ ist. Unter dieser Bedingung erhält man am Ausgang der Sample and Hold-Schaltung SH

2

eine in diskreten Abständen $t_A = \left| \frac{1}{f_2} - \frac{1}{f_1} \right|$ abgetastete Impulsfolge [s. Zeile 4) in Figur 2], die gegenüber der empfangenen Impulsfolge [zeile 2)] zeitexpandiert ist. Diese Zeitexpansion hat den Vorteil, daß die anschließende Weiterverarbeitung und Auswertung der abgetasteten Impulse mit weniger aufwendigen Schaltungsmitteln erfolgen kann. Wenn diesem Vorteil keine Beachtung geschenkt werden muß, ist auch eine Abtastung mit einer Frequenz $f_2 > f_1$ möglich. Auszuschließen ist aber eine Abtastfrequenz $f_2 = \frac{1}{k} f_1$ ($k = 1, 2, 3...$), denn dabei werden alle Impulse der Impulsfolge [Zeile 2)] an der gleichen Stelle abgetastet, und damit vermitteln die Abtastwerte keine Imformation über die Form der Impulse.

Die einzelnen am Ausgang der Sample and Hold-Schaltung SH erscheinenden Abtastwerte werden in einem Analog-Digital-Umsetzer AD digitalisiert. Dann werden die digitalisierten Abtastwerte nacheinander in einen ersten aus mehreren seriell angeordneten Speicherplätzen bestehenden Speicher SP1 in der Weise eingeschrieben, daß bei jedem Eintreffen eines digitalisierten Abtastwertes am ersten Speicherplatz die vorangehenden digitalisierten Abtastwerte um jeweils einen Speicherplatz weitergeschoben werden. Es sind mindestens soviele (n) Speicherplätze vorhanden wie auf einen Impuls [s. Zeile 4)] entfallende Abtastwerte. In einem aus genausovielen Speicherplätzen bestehenden zweiten Speicher SP2 sind digitale Abtastwerte eines Referenzimpulses abgespeichert. Dieser Referenzimpuls besitzt zumindest annähernd die gleiche Form wie die zu erwartenden empfangenen Impulse. Jedesmal wenn ein neuer digitalisierter Abtastwert in den ersten Speicher SP1 hineingeschoben wird, werden die Inhalte korrespondierender Speicherplätze des ersten und des zweiten Speichers SP1 und SP2 in einem Multiplizierer M miteinander multipliziert und sämtliche dabei entstehenden Produkte von einem Summierer SU addiert. Die Höhe der Summe ist ein Maß für die Übereinstimmung des augenblicklich im ersten Speicher SP1 befindlichen Ausschnitts der Impulsfolge mit dem Referenzimpuls. Übersteigt nämlich die Summe eine in einem Schwellwertentscheider SE vorgegebene Schwelle, dann besteht große Übereinstimmung zwischen dem im ersten Speicher SP1 vorliegenden Ausschnitt der Impulsfolge und dem Referenzimpuls im zweiten Speicher SP2, so daß man davon ausgehen kann, daß der den ersten Speicher SP1 gerade belegende Ausschnitt der Impulsfolge einem vollständigen Impuls entspricht. Der Schwellwertentscheider SE initiiert in diesem Fall die Übernahme der in den ersten Speicher SP1 eingeschriebenen Abtastwerte des Impulses in einen dritten Speicher SP3. Um das Signal-Rauschleistungs-Verhältnis des im dritten Speicher SP3 abgelegten Impulses zu verbessern, werden mehrere vom ersten Speicher SP1 in den dritten Speicher SP3 übernommene Impulse aufaddiert und das Ergebnis dieser Summierung durch die Zahl der Akkumulationen dividiert. Dieser Mittelungsprozeß kann im dritten Speicher SP3 selbst oder auch in einem an seinen Ausgang angeschlossenen Signalprozessor SP durchgeführt werden.

Der gemittelte, aus der empfangenen Impulsfolge detektierte Impuls wird nun in dem Signalprozessor SP analysiert. D.h. es wird, je nachdem, welche Übertragungseigenschaften des als Meßobjekt dienenden Lichtwellenleiters LWL ermittelt werden sollen, die Dispersion und/oder Dämpfung des detektierten Impulses bestimmt. Um eine durch den Lichtwellenleiter verursachte Dispersion und/oder Dämpfung bestimmen zu können, wird vor dem Anschluß des Meßobjekts an den Sender S und des Empfänger E dem Signalprozessor SP ein Bezugsimpuls übermittelt, der einem vom Sender erzeugten Impuls entspricht. Im Signalprozessor SP wird von diesem Sendeimpuls sowie von dem nach der Übertragung über den Lichtwellenleiter LWL detektierten Impuls durch Fouriertransformation jeweils das Frequenzspektrum S2(f), S1(f) ermittelt. Die Übertragungsfunktion H(f) des Lichtwellenleiters LWL ergibt sich aus dem Quotient des Frequenzspektrums S2(f) des übertragenen Impulses und des Frequenzspektrums S1(f) des Sendeimpulses:

H(f) = S2(f)/S1(f)

Die Dämpfung a des Lichtwellenleiters LWL läßt sich aus dem Flächenverhältnis A2/A1 der beiden Impulse berechnen:

a = -10lg(A2/A1)

Das Flächenverhältnis A2/A1 der Impulse entspricht dem Wert der Ubertragungsfunktion bei der Frequenz f = 0:

A2/A1 = H(f = 0) = S2(f = 0)/S1(f = 0).

Die Ubertragungsfunktion H(f) drückt auch die aus der Lichtwellenleiterübertragung resultierende Impulsverbreiterung relativ zu der Impulsbreite des Sendeimpulses aus. Sie enthält also eine Information über den dispersiven Charakter des als Meßobjekt eingesetzten Lichtwellenleiters LWL. Ebenfalls läßt sich aus der Übertragungsfunktion H(f) des Lichtwellenleiters LWL auch dessen Bandbreite bestimmen. Die Bandbreite ist nämlich diejenige Frequenz f, bei der $|H(f)| = 1/2$ ist.

Alle vom Signalprozessor SP ermittelten Übertragungseigenschaften (Dispersion, Dämpfung, Bandbreite) des Lichtwellenleiters LWL können auf einer Anzeigeeinheit AT dargestellt werden.

**Ansprüche**

1. Verfahren zum Ermitteln der Übertragungseigenschaften eines Lichtwellenleiters, wobei in den Lichtwellenleiter eine Lichtimpulsfolge eingespeist wird, dann die über den Lichtwellenleiter übertragene Lichtimpulsfolge in einem Empfänger in eine proportionale elektrische Impulsfolge umgewandelt wird, daraus einzelne Impulse detektiert werden und anschließend die von den Übertragungseigenschaften des Lichtwellenleiters abhängigen Veränderungen der detektierten Impulse gegenüber den Impulsen vor der Übertragung ermittelt werden, dadurch gekennzeichnet, daß die empfangenen Impulse kontinuierlich mit einem Referenzimpuls, der zumindest annähernd die Form der zu erwartenden übertragenen Impulse besitzt, verglichen werden und daß ein solcher in das Referenzimpuls-Fenster fallender Ausschnitt der empfangenen Impulsfolge, welcher ein oberhalb einer vorgegebenen Schwelle liegendes Maß an Übereinstimmung mit dem Referenzimpuls aufweist, ausgeblendet wird für die Ermittlung der Impulsveränderungen.

2. Verfahren nach Anspruch 1, dadurch gekennzeichnet, daß die übertragene Impulsfolge abgetastet und die einzelnen Abtastwerte digitalisiert werden, daß dann die digitalisierten Abtastwerte in einen ersten aus mehreren seriell angeordneten Speicherplätzen bestehenden Speicher (SP1) in der Weise eingeschrieben werden, daß bei jedem Eintreffen eines digitalisierten Abtastwertes am ersten Speicherplatz die vorangehenden digitalisierten Abtastwerte um jeweils einen Speicherplatz weitergeschoben werden, daß die in den einzelnen Speicherplätzen vorliegenden Abtastwerte mit jedem Eintreffen eines neuen Abtastwertes im ersten Speicher (SP1) mit Abtastwerten in korrespondierenden Speicherplätzen eines zweiten Speichers (SP2) multipliziert werden, wobei in den Speicherplätzen des zweiten Spechers (SP2) digitalisierte Abtastwerte des Referenzimpulses abgelegt sind, daß die so bei jedem Eintreffen eines Abtastwertes gebildeten Abtastwertprodukte aufsummiert werden, und daß, wenn diese Summe eine vorgegebene Schwelle übersteigt, die Übernahme der augenblicklich im ersten Speicher (SP1) vorliegenden Abtastwerte in einen dritten Speicher (SP3) veranlaßt wird, dessen Inhalt für die Ermittlung der Impulsveränderungen herangezogen wird.

3. Verfahren nach Anspruch 2, dadurch gekennzeichnet, daß ber mehrere nacheinander in den dritten Speicher (SP3) eingeschriebene digitalisierte Ausschnitte der empfangenen Impulsfolge gemittelt wird und dann das Ergebnis dieser Mittelung für die Bestimmung von Impulsveränderungen herangezogen wird.

4. Verfahren nach Anspruch 1 oder 2, dadurch gekennzeichnet, daß die übertragene Impulsfolge mit einer Frequenz abgetastet wird, die von der Impulsfolgefrequenz der übertragenen Impulsfolge abweicht.

Fig. 1

EP 0 368 001 A2

Fig. 2

EP 0 368 001 A2

BK 88 / 107